# EUROPÄISCHE PATENTSCHRIFT

(11) **EP 0 970 155 B1**
(45) Veröffentlichungstag und Bekanntmachung des Hinweises auf die Patenterteilung: **20.08.2003**
(21) Anmeldenummer: 98919146.5
(22) Anmeldetag: 25.03.1998
(51) Int. Cl.: C09D 125/14, C09D 133/06, B05D 7/00, C08K 5/3492

(54) **WÄSSRIGES BESCHICHTUNGSMITTEL**
AQUEOUS COATING AGENT
AGENT DE REVETEMENT AQUEUX

(30) Priorität: 27.03.1997 DE 19712940
(43) Veröffentlichungstag der Anmeldung: 12.01.2000
(73) Patentinhaber: BASF Coatings AG, 48165 Münster (DE)
(72) Erfinder: SAPPER, Eckehard, D-48346 Ostbevern (DE); SCHADE, Christian, D-67061 Ludwigshafen (DE); WENDEL, Kurt, D-67063 Ludwigshafen (DE); BAUMGART, Hubert, D-48163 Münster (DE)
(74) Vertreter: Fitzner, Ulrich, Dr.
(86) Internationale Anmeldenummer: EP9801743
(87) Internationale Veröffentlichungsnummer: WO98044060

(56) Entgegenhaltungen:
- WO-A-91/14711
- WO-A-96/36670
- WO-A-97/23307
- US-A- 5 565 243

## Beschreibung

Die vorliegende Erfindung betrifft ein wäßriges Beschichtungsmittel, die eine wäßrige Polymerdispersion enthält, enthaltend
(i) ein Acrylat-Polymer auf Basis von 30 bis 60 Gew.-% C₁-C₈-Alkyl(meth)acrylat-Monomeren, 30 bis 60 Gew.-% vinylaromatischen Monomeren und 0,5 bis 10 Gew.-% (Meth)acrylsäure und
(ii) einen nicht-assoziativ wirkenden Rheologie-Stabilisator, der ein Acrylat-Copolymer auf Basis von (C₁-C₆)-Alkyl(meth)acrylat und (Meth)acrylsäure ist, und
ein Verfahren zur Herstellung eines mehrschichtigen Überzugs.

Aus dem Stand der Technik sind Verfahren zur Lackierung von Fahrzeug- insbesondere Automobilkarosserien bekannt, bei denen das Substrat in der Regel zuerst mit einem Elektrotauchlack und/oder Steinschlagzwischengrund bzw. einer Füilerschicht beschichtet wird und anschließend unter Verwendung eines mindestens ein Pigment enthaltenden Lackes eine pigmentierte Basislackschicht aufgebracht und diese Basislackschicht gegebenenfalls mit einem transparenten Lack überlackiert wird. Die so erhaltene ein- bzw. mehrschichtige Lackierung wird anschließend eingebrannt.

In der WO 96/36670 z.B. werden oxidationsbeständige Basislacke beschrieben, welche aus wäßrigen Dispersionen von Acrylat/Styrol-Copolymerisaten und Verdickern erhalten werden. Überzüge aus Basislack und Decklack mit verbesserter Säure-, Abrieb- und Witterungsbeständigkeit sind darüber hinaus z.B. aus der US 5,565,243 bekannt.

Die zur Herstellung der Basislackschicht verwendeten Basislacke sind üblicherweise Systeme auf Wasser- bzw. Lösungsmittelbasis. Sie enthalten als Hauptbindemittel in der Regel Polyurethan-Dispersionen oder Acrylatdispersionen, kombiniert mit wassermischbaren vernetzbaren Polyestem sowie wassermischbaren Melaminharzen die eine Reihe von Problemen hervorrufen, wie z.B. geringe Lagerstabilität, Neigung zur Vergilbung und instabile Viskosität.

Die pigmentierten Basislacke benötigen für eine gute Verarbeitbarkeit und ein gutes und einheitliches Aussehen des lackierten Substrates ein pseudoplastisches Verhalten in Kombination mit einer gewissen Strukturviskosität. Zu einer guten Verarbeitbarkeit zählen insbesondere eine gute Versprühbarkeit, Lagerstabilität, Rührstabilität und Ringleitungsstabilität. Das Aussehen des lackierten Substrates zeichnet sich durch eine gute Schleiffleckenabdeckung, hohen metallischen Effekt, gute Haftung zum Substrat und den ggf. darauf aufgebrachten weiteren Lacken, Spritzwasserbeständigkeit und Wetterfestigkeit aus.

Derartige Eigenschaften sind insbesondere bei Metallic-Lacken zur Entwicklung eines hohen metallischen Effektes von Vorteil.

Das pseudoplastische Verhalten und die Strukturviskosität sollten die Lacke im Hinblick auf die pH-Werte der eingsetzten Bindemittellösungen vor allem ab pH 6 bis etwa 8 voll entwickeln. Um derartige Eigenschaften zu erhalten werden in der Regel Verdicker bzw. Rheologiehilfsmittel wie ionische Schichtsilikate, Xanthan Gum, Diharnstoffverbindungen, Polyurethanverdicker, Bentonit, Wachse sowie Wachscopolymere eingesetzt.

Der Einsatz dieser Verdicker führt jedoch nicht in allen Fällen zu den gewünschten Lackierergebnissen auch kann es zu Problemen bei der Verarbeitung, d.h. beim Lackieren, kommen.

Der vorliegenden Erfindung liegt die Aufgabe zugrunde, ein Beschichtungsmittel sowie ein Verfahren zur Herstellung von mehrschichtigen Überzügen auf einer Substratoberfläche zur Verfügung zu stellen, worin Vernetzer und Rheologiehilfsmittel eingesetzt werden, die dem Beschichtungsmittel das gewünschte pseudoplastische Verhalten und die Strukturviskosität verleihen und zu Beschichtungen mit hervorragendem Aussehen und bei Metallic-Lacken mit hohem metallischem Effekt führen. Eine weitere Aufgabe bestand darin, Beschichtungsmittel zur Verfügung zu stellen, die mit beliebigen üblichen Klarlacken überlackiert werden können.

Gegenstand der vorliegenden Erfindung ist demgemäß ein wäßriges Beschichtungsmittel, das als eine Bindemittelkomponente eine wäßrige Polymerdispersion enthält, enthaltend
(i) ein Acrylat-Polymer auf Basis von 30 bis 60 Gew.-% C₁-C₈-Alkyl(meth)acrylat-Monomeren, 30 bis 60 Gew.-% vinylaromatischen Monomeren und 0,5 bis 10 Gew.-% (Meth)acrylsäure und
(ii) einen nicht-assoziativ wirkenden Rheologie-Stabilisator, der ein Acrylat-Copolymer auf Basis von (C₁-C₆)-Alkyl(meth)acrylat und (Meth)acrylsäure ist, und
(iii) als Vernetzer Tris(alkoxycarbonylamino)triazin oder eine Mischung aus Tris(alkoxycarbonylamino)triazinen

Überraschenderweise werden erfindungsgemäß durch den Einsatz einer Kombination aus einem nicht-assoziativ wirkenden Rheologie-Stabilisator, der ein Acrylat-Copolymer auf Basis von (C₁-C₆)-Alkyl(meth)acrylat und (Meth)acrylsäure ist und Tris(alkoxycarbonylamino)triazin als Vernetzer eine deutliche Verbesserung des Metallic-Effektes und eine Reduzierung des Mud-Crackings erzielt werden kann. Die erfindungsgemäßen Lacke können mit üblichen Klarlacken, wie 1-Komponenten-Klarlacke auf Basis von Acrylat/Melamin, 1-Komponenten-Klarlacke auf Basis von Acrylat/Melamin/Polyurethan, 2-Komponenten-Acrylat/Polyurethan-Klarlacke sowie Pulverklarlacke überlackiert werden.

Als Vernetzer enthält das erfindungsgemäße Beschichtungsmittel Tris(alkoxycarbonylamino)triazine der Formel 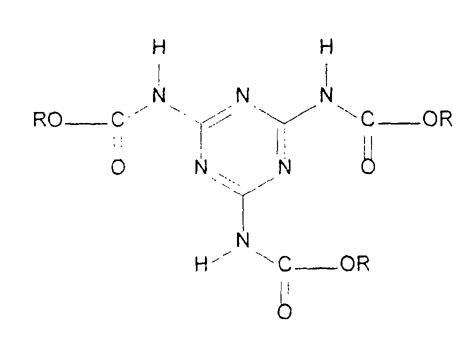 wobei R für C₁-C₆-Alkylgruppen, vorzugsweise für Methyl-, Ethyl-, Propyl- und Butyl-Gruppen, stehen. Ebenso können Derivate der genannten Verbindungen zum Einsatz kommen. Bevorzugt werden solche Tris(alkoxycarbonylamino)triazine eingesetzt, wie sie in der US-PS 5084541 beschrieben sind. Die Vernetzer der Komponene (iii) können in einer Menge von 5 bis 35 Gew.-%, bevorzugt in einer Menge von 10 bis 20 Gew.-%, bezogen auf den Festkörpergehalt des gesamten Mittels, enthalten sein.

Die Carbamatgruppen reagieren bevorzugt mit OH-Trägern und zwar sterisch möglichst wenig gehinderten Hydroxylgruppen. Aminogruppen kann das Tris(alkoxycarbonylamino)triazin nicht vernetzen. Es kommt vielmehr zu einer Abspaltung der Carbalkoxygruppierung.

Das erfindungsgemäß eingesetzte Acrylat-Polymer der Komponente (i) kann als C₁-C₈-Alkyl(meth)acrylat-Monomereinheiten die linearen und verzweigtkettigen Derivate enthalten, wobei Methyl(meth)acrylat, Ethyl(meth)acrylat, n-Propyl- und iso-Propyl(meth)acrylat, n-Butyl- und iso-Butyl(meth)acrylat und 2-Ethylhexyl(meth)acrylat bevorzugt sind. Als weitere Monomere können auch (Meth)acrylamid-Monomere und deren Derivate enthalten sein.

Als vinylaromatische Monomere, die als Monomereinheiten im Acrylat-Polymer der Komponete (i) vorliegen, können z.B. Styrol, α-Alkylstyrol und Vinyltoluol genannt werden.

Das Acrylat-Polymer kann nach aus dem Stand der Technik bekannten Verfahren, beispielsweise Emulsionspolymerisation, hergestellt werden. Vorzugsweise wird das Acrylat-Polymer in Form einer Dispersion eingesetzt. Während des Herstellverfahrens wird das Mengenverhältnis zwischen den Monomeren und dem Wasser vorzugsweise so eingestellt, daß die resultierende Dispersion einen Festkörpergehalt von 30 bis 60 Gew.-%, vorzugsweise 35 bis 60 Gew.-%, aufweist und direkt zur Herstellung des erfindungsgemäßen Beschichtungsmittels eingesetzt werden kann. Ein besonders geeignetes Acrylat-Polymer ist im Handel als wäßrige Dispersion unter der Bezeichnung Acronal 290 D (BASF AG; Ludwigshafen) erhältlich.

Zur Herstellung einer Dispersion des Acrylat-Polymers wird als Emulgator vorzugsweise ein anionischer Emulgator allein oder im Gemisch mit anderen eingesetzt.

Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4 bis 5 Mol Ethylenoxid pro Mol umgesetzten Nonylphenols, Alkyl - oder Arylsulfonats, Natriumlaurylsulfat, Natriumlaurylethoxylatsulfat und sekundäre Natriumalkansulfonate, deren Kohlenstoffkette 8 - 20 Kohlenstoffatome enthält. Die Menge des anionischen Emulgators beträgt 0,1 bis 5,0 Gew.-%, bezogen auf die Monomeren, vorzugsweise 0.5 bis 3,0 Gew.-%. Ferner kann zur Erhöhung der Stabilität der wäßrigen Dispersionen zusätzlich ein nichtionischer Emulgator vom Typ eines ethoxylierten Alkylphenols oder Fettalkohols, z.B. ein Additionsprodukt von 1 Mol Nonylphenol und 4 bis 30 Mol Ethylenoxid in Mischung mit dem anionischen Emulgator eingesetzt werden.

Die Glasübergangstemperatur des Acrylatpolymers liegt vorzugsweise zwischen 15°C und 35°C, besonders bevorzugt zwischen 20°C und 25°C.

Das erfindungsgemäß eingesetzte Acrylatpolymer hat bevorzugt ein Zahlen-mittleres Molmasse (Bestimmung: Gelpermeationschromatographisch mit Polystyrol als Standard) von 200.000 bis 2.000.000, vorzugsweise von 300.000 bis 1.500.000.

In den erfindungsgemäßen Beschichtungsmitteln ist das Acrylatpolymer in einer Menge enthalten, welche sich nach dem jeweiligen Verwendungszweck der erfindungsgemäßen Beschichtungsmitteln richtet. Die für den jeweiligen Verwendungszweck geeignete Menge kann der Fachmann anhand einfacher Vorversuche ermitteln. Erfindungsgemäß ist es von Vorteil, wenn das Acrylatpolymer in einer Menge von 1 bis 50 Gew.-%, vorzugsweise 2 bis 45 Gew.-% und insbesondere 4 bis 40 Gew-%, bezogen auf den Festkörpergehalt im erfindungsgemäßen Beschichtungsmittel enthalten ist.

Als Rheologie-Stabilisator-Komponente (ii) in dem Beschichtungsmittel werden erfindungsgemäß Acrylat-Copolymere mit nicht-assoziativ wirkenden Gruppen eingesetzt, die als Monomereinheiten (C₁-C₆)-Alkyl(meth)acrylat und (Meth)acrylsäure enthalten. Ein bevorzugtes Copolymer enthält als Monomereinheiten (Meth)acrylsäure und mindestens zwei unterschiedliche (C₁-C₆)-Alkyl(meth)acrylatmonomere. Im Copolymer liegt die (Meth)acrylsäure bevorzugt in Mengen von 40 Gew.-% bis 60 Gew.-%, besonders bevorzugt von 46 Gew.-% bis 55 Gew.-%, bezogen auf die Menge des gesamten Copolymers, vor. Das erste (C₁-C₆)-Alkyl(meth)acrylatmonomer ist vorzugsweise in Mengen von 30 Gew.-% bis 50 Gew.-%, insbesondere 36 Gew.-% bis 46 Gew.-%, und das zweite (Meth)acrylatpolymer vorzugsweise in Mengen von 1 Gew.-% bis 10 Gew.-%, insbesondere 2 Gew.-% bis 8 Gew.-%, jeweils bezogen auf die Menge des gesamten Copolymers, enthalten. Das Rheologiehilfsmittel sollte der Basisbeschichtungszusammensetzung insbesondere bei dem eingesetzten, in der Regel alkalischen pH-Wert die gewünschte Viskosität verleihen. Ein besonders bevorzugter Rheologie-Stabilisator ist, wenn er als Dispersion vorliegt, dünnflüssig und verdickt bei neutralem bzw. basischem pH-Wert. Das Acrylat-Copolyer wird der geeigneterweise als fertige Dispersion eingesetzt. Als Emulgatoren enthalten derartige Dispersionen vorzugsweise Fettalkoholalkoxylate, insbesondere C₈-C₂₂-Fettalkoholethoxylate. Eine besonders geeignete Acrylat-Copolymer-Dispersion ist im Handel unter der Bezeichnung Viscalex HV 30 (Allied Corporation, Groß Britannien) erhältlich.

Der Rheologie-Stabilisator ist im erfindungsgemäßen Beschichtungsmittel vorzugsweise in einer Menge von 0,5 bis 5,0 Gew.-%, insbesondere etwa 0,3 bis 1,5 Gew.-%, bezogen auf den Festkörpergehalt, enthalten. Üblicherweise wird der Rheologie-Stabilisator als Dispersion mit einer Konzentration von 5 bis 45 Gew.-%, vorzugsweise von 7 bis 35 Gew.-%, eingesetzt.

Das erfindungsgemäße Beschichtungsmittel kann noch weitere Rheologiehilfsmittel, wie ionische Schichtsilikate, Xanthan Gum, Diharnstoffverbindungen, Polyurethanverdicker, Bentonit, Wachse sowie Wachscopolymere enthalten.

Als Hilfsbindemittel kann das erfindungsgemäße Beschichtungsmittel auch epoxyfunktionelle und/oder carboxyl-funktionelle Bestandteile enthalten, wie übliche Glycidylverbindungen, wie z.B. Glycidylacrylat oder Glycidylmethacrylat. Als carboxyl-funktionelle Vernetzer eignen sich beispielsweise Carbonsäuren, insbesondere gesättigte, geradkettige, aliphatische Dicarbonsäuren mit 3 bis 20 C-Atomen im Molekül, wobei Dodecan-1,12-disäure bevorzugt eingesetzt wird.

Als weiteres Hilfsbindemittel kann auch Polyvinylalkohol eingesetzt werden. Es wurde festgestellt, daß durch den Zusatz von Polyvinylalkohol in einer Menge bis zu 10 Gew.-%, vorzugsweise von 1 bis 5 Gew.-%, die Verträglichkeit mit den auf der Basisbeschichtungszusammensetzung aufgebrachten Deckbeschichtungszusammensetzungen verbessert werden kann. Polyvinylalkohol wirkt Lösemittel-abstoßend, so daß in der Deckbeschichtungszusammensetzung möglicherweise enthaltenes Lösemittel oder andere Komponenten aufgrund der abstoßenden Wirkung des Polyvinylalkhols nicht in die Basisbeschichtungszusammensetzung eindringen und die Farbe verändern können.

Als weitere Vernetzer sind die auf dem Lackgebiet bekannten Vernetzer wie Melamin-Harze einsetzbar, die mit freien OH-Gruppen reagieren können.

Die erfindungsgemäßen Beschichtungsmittel können neben den voranstehend beschriebenen Polymeren noch weitere verträgliche wasserverdünnbare Harze enthalten, wie z.B. Aminoplastharze, Polyester, Polyurethane sowie acrylierte Polyurethane und urethanisierte Acrylate, insbesondere hydroxylgruppenhaltige, die als Zusatzmittel, insbesondere als Vernetzungskomponenten für die erfindungsgemäß zu verwendende Komponente (iii), zur Erreichung bestimmter lacktechnischer Eigenschaften wie Haftungsverbesserung oder im allgemeinen als Anreibeharze für Pigmente dienen.

Das Hilfsbindemittel und/oder weitere Vernetzer können in einer Menge bis zu 10 Gew.-%, insbesondere von 0,5 bis 10 Gew.-%, eingesetzt werden.

Die erfindungsgemäßen Beschichtungsmittel weisen im allgemeinen einen Festkörpergehalt von etwa 15 bis 60 Gew.-% auf. Der Festkörpergehalt variiert mit dem Verwendungszweck der Beschichtungszusammensetzungen. Für Metalliclacke liegt er beispielsweise bevorzugt bei 12 bis 25 Gew.-%. Für unifarbige Lacke liegt er höher, beispielsweise bei 14 bis 55 Gew.-%.

Zur Neutralisierung der Komponenten (i) und (ii) können Ammoniak und/oder Amine (insbesondere Alkylamine), Aminoalkohole und cyclische Amine, wie Diethylamin und Triethylamin, Aminomethylpropanol, Dimethylethanolamin, Dimethylaminoethanolamin, Diisopropanolamin; Morpholin, N-Alkylmorpholin, eingesetzt werden. Für die Neutralisation werden leicht flüchtige Amine bevorzugt. Das wäßrige Beschichtungsmittel wird üblicherweise auf einen pH-Wert zwischen 6 und 9, vorzugsweise 7 bis 8,5 eingestellt.

Das erfindungsgemäße Beschichtungsmittel kann organische Lösemittel in einer Menge bis zu 15 Gew.-% enthalten. Als organische Lösemittel sind beispielsweise Naphthaline, Benzine und Alkohole geeignet. Als weitere flüssige Komponenten können die erfindungsgemäßen Basislacke Alkylenglykole, wie Ethylenglykol, Propylenglykol, Butylenglykol, Butandiol-1.4, Hexandiol-1,6, Neopentylglykol und andere Diole, wie Dimethylolcyclohexan, enthalten.

Als Pigmente kann das erfindungsgemäße Beschichtungsmittel übliche, zur Lackierung von Automobilkarosserien eingesetzte Pigmente enthalten, wie z.B. Effektpigmente sowie organische und anorganische farbgebende Pigmente.

Beispiele für geeignete Effektpigmente sind handelsübliche Aluminiumbronzen, die gemäß DE-OS 36 36 183 chromatierten Aluminiumbronzen, handelsübliche Edelstahlbronzen sowie andere übliche Metallplättchen und Metallflockenpigmente sowie nichtmetallische Effektpigmente, wie z.B. Perlglanz- bzw. Interferenzpigmente.

Beispiele für geeignete farbgebende Pigmente auf anorganischer Basis sind Titandioxid, Eisenoxide, Ruß u.ä. Beispiele für farbgebende Pigmente auf organischer Basis sind Indanthrenblau, Cromophthalrot, Irgazinorange, Sicotransgelb, Heliogengrün u.ä.

Ferner können Korrosionsschutzpigmente, wie z.B. Zinkphospat, enthalten sein.

Zusätzlich kann das Beschichtungsmittel auch auf dem Gebiet der Lackchemie übliche Füllstoffe enthalten. Hierzu zählen Kieselsäure, Magnesiumsilikat, Talkum, Bentone, Titandioxid und Bariumsulfat.

Der Anteil der Pigmente und Füllstoffe im erfindungsgemäßen Beschichtungsmittel kann insgesamt 3 bis 25 Gew.-%, bezogen auf den Festkörpergehalt, betragen. Das Pigment kann in beliebiger Weise zugesetzt werden, z.B. als wäßrige Slurry oder als Paste. Die Pigmente können beispielsweise mit einem Anreibeharz, wie einem Hilfsbindemittel, Dispergierhilfsmittel oder Wasser angerieben werden. Bei unifarbenen Lacken ist es bevorzugt, die Pigmente in Dispergierhilfsmittel und Wasser aufzuschlämmen. Werden Aluminium bzw. Flakes eingesetzt, so werden diese ggf. in Lösemittel sowie evtl. einem Gemisch aus Wasser und Netzmittel aufgeschlämmt oder im Hauptbindemittel oder in einem anderen Hilfsbindemittel angerieben.

Die Menge der Komponente (i) kann in Abhängigkeit vom eingesetzten Pigment variieren. Sind die Pigmente organische und/oder anorganische farbgebende Pigmente, so ist die Polymerdispersion vorzugsweise in einer Menge von 25 bis 50 Gew.-%, bezogen auf den Festkorpergehalt, enthalten. Sind die Pigmente Effektpigmente, ist die Polymerdispersion vorzugsweise in einer Menge von 15 bis 30 Gew.-%, bezogen auf den Festkörpergehalt, enthalten.

Als weitere Komponente kann das Beschichtungsmittel Filmbildehilfsmittel enthalten. Als Filmbildehilfsmittel kommen Dicarbonsauredialkylester, 1.2-Propylenglykol, hochsiedende Benzine und Naphthaline in Betracht, die einen Siedepunkt über 100°C, vorzugsweise über 140°C aufweisen.

Das Beschichtungsmittel kann gegebenenfalls noch weitere Hilfsmittel und Additive enthalten. Beispiele hierfür sind Katalysatoren, Hilfsstoffe, Entschäumungsmittel, Dispersionshilfsmittel, Netzmittel, vorzugsweise carboxy-funktionelle Dispergiermittel, Antioxidantien, UV-Absorber, Radikalfänger, Verlaufsmittel, Biozide und/oder Wasserrückhaltemittel.

Ein weiterer Gegenstand der vorliegenden Erfindung ist ein Verfahren zur Herstellung eines mehrschichtigen Überzugs auf einer Substratoberfläche.

In einer ersten Ausführungsform wird
(A) auf eine mit einem üblichen Füller beschichtete Substratoberfläche als Basisbeschichtungszusammensetzung eine wäßrige Beschichtungszusammensetzung, die als filmbildendes Mittel das oben beschriebene Beschichtungsmittel enthält, aufgebracht,
(B) auf die so erhaltene Basisschicht eine geeignete transparente Deckbeschichtungszusammensetzung aufgebracht und
(C) die Basisschicht zusammen mit der Deckschicht eingebrannt.

Das erfindungsgemäße Beschichtungsmittel kann gegebenenfalls vor Aufbringen auf die Füllerschicht noch mit Wasser zur Einstellung des Festkörpergehaltes, Lösungsmittel oder Rheologiehilfsmittel zur Einstellung der anwendungstechnischen Eigenschaften sowie ggf. eine Base zur pH-Regulierung versetzt werden. Sollte die Viskosität noch nicht in dem gewünschten Bereich liegen, so kann erneut Rheologie-Stabilisator (ii) oder weiterer Verdicker, ggf. in einer Menge von 0,001 bis 0.006 Gew.-%, bezogen auf den Festkörpergehalt, zugesetzt werden.

Die in Stufe (A) auf das Substrat aufgebrachte Basisschicht wird erfindungsgemäß in Stufe (B) mit einer geeigneten transparenten Deckbeschichtung überlackiert. Vor dem Auftragen der transparenten Deckbeschichtung läßt man das Überzugsmittel vorteilhafterweise kurz abdunsten, vorzugsweise 1 bis 15 Minuten, insbesondere 4 bis 8 Minuten, bei einer Temperatur von 60 bis 100°C, vorzugsweise von 70 bis 85°C. Der Zeitraum des Abdunstens hängt von der Temperatur ab und ist über weite Bereiche einstellbar.

Besonders beständige mehrschichtige Überzüge können erhalten werden, wenn das in Stufe (A) erhaltene Substrat vor dem Aufbringen der Deckbeschichtung angetrocknet wird, so daß eine ausreichende Verfilmung bzw. Vernetzung vorliegt, so daß Wasser und/oder Lösungsmittel, die ggf. in der in Stufe (B) aufgebrachten Deckbeschichtungszusammensetzung enthalten sind, nicht in die Basischicht diffundieren können.

Als transparente Deckbeschichtung können alle üblichen Deckbeschichtungen verwendet werden. Bevorzugt werden die auf dem Gebiet der Lackchemie verwendeten Klarlacke, wie z.B. Klarlacke auf Wasser- oder Lösemittelbasis, Pulverklarlacke, Pulverslurry-Klarlacke, lösemittelhaltige und wäßrige Zweikomponenten-Klarlacke usw. eingesetzt werden.

Die transparente Deckbeschichtung kann nach üblichen im Stand der Technik bekannten Verfahren aufgebracht werden.

In einer zweiten Ausführungsform wird ein mehrschichtiger Überzug auf einer Substratoberfläche hergestellt, bei dem
(D) auf eine mit einer wäßrigen Basisbeschichtungszusammensetzung (X) beschichtete Substratoberfläche eine wäßrige Basisbeschichtungszusammensetzung (Y), die als filmbildendes Mittel eine wäßrige Polymerdispersion wie oben definiert enthält, aufgebracht wird,
(E) auf die in Stufe (D) erhaltene Zusammensetzung eine geeignete transparente Deckbeschichtungszusammensetzung aufgebracht wird und
(F) die Basisbeschichtungszusammensetzungen (X) und (Y) zusammen mit der Deckbeschichtungszusammensetzung eingebrannt werden.

In dieser Ausführungsform wird das erfindungsgemäße Beschichtungsmittel in Schritt (D) auf eine mit einer wäßrigen Basisbeschichtungszusammensetzung (X) beschichtete Substratoberfläche aufgebracht. Als wäßrige Basisbeschichtungszusammensetzung (X) wird vorzugsweise eine Lackschichtformulierung verwendet, die a) als Bindemittel ein wasserverdünnbares Polyurethanharz enthält, das eine Säurezahl von 10 bis 60 und ein zahlenmittleres Molekulargewicht von 4000 bis 25000 aufweist und herstellbar ist, indem aa) ein Polyester- und/oder Polyetherpolyol mit einem zahlenmittleren Molekulargewicht von 400 bis 5000 oder ein Gemisch aus solchen Polyester- und/oder Polyetherpolyolen, bb) ein Polyisocyanat oder einem Gemisch aus Polyisocyanaten, cc) eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und ggf. dd) eine Hydroxyl- und/oder Aminogruppen enthaltende organische Verbindung mit einem Molekulargewicht von 40 bis 400 oder ein Gemisch aus solchen Verbindungen miteinander umgesetzt werden und das entstandene Reaktionsprodukt wenigstens teilweise neutralisiert wird, sowie b) Pigmente und/oder Füllstoffe enthält, wobei das Verhältnis von Bindemittel zu Pigment zwischen 0,5 : 1 und 1,5:1 liegt.

Für diese Formulierung ist es besonders vorteilhaft, wenn eine Lackschichtformulierung auf Basis einer physikalisch trocknenden Polyurethandispersion ohne Polyester und Aminoplastharze hergestellt wird. Es wurde festgestellt, daß die Anwendung eines nur aus Polyurethanharzen und Pigmenten bestehenden Lackes zu einem Material führt, das als Füllerund Steinschlagzwischengrundschicht besonders gut verwendbar ist, da es unerwartet stabil gegen mechanische Beanspruchungen, insbesondere Steinschlag und Stöße ist.

Die Komponente (a) kann aus aa), bb), cc) und ggf. dd) nach den dem Fachmann gut bekannten Methoden der Polyurethanchemie hergestellt werden (vgl. z.B. US-PS 4719132, DE-OS 36 28 124, EP-A-89497, EP-A-256540 und WO 87/03829). Als Komponente (aa) können gesättigte und ungesättigte Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel
H(-O-(CHR¹)ₙ-)ₘOH, wobei R¹ = Wasserstoff oder ein niedrigerer, ggf. substituierter Alkylrest ist, n=2 bis 6, bevorzugt 3 bis 4 und m=2 bis 100, bevorzugt 5 bis 50 ist. Als Beispiele werden lineare oder verzweigte Polyetherdiole, wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im Molmassenbereich Mₙ von 400 bis 3000.

Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren anwesend sein.

Es können auch Polyesterdiole eingesetzt werden die durch Umsetzung eines Lactons mit einem Diol erhalten werden. Diese zeichnen sich durch die Gegenwart von endständigen Hydroxylgruppen und wiederkehrenden Polyesteranteilen der Formel (-CO-(CHR²)ₙ-CH₂-O) aus. Hierbei ist n bevorzugt 4 bis 6 und der Substituent R² Wasserstoff, ein Alkyl-, Cycloalkyl- oder Alkoxy-Rest.

Die Substituenten können bis zu 18 Kohlenstoffatome aufweisen. Beispiele hierfür sind Hydroxycapronsäure, Hydroxybuttersäure, Hydroxydecansäure und/oder Hydroxystearinsaure

Für die Herstellung der Polyesterdiole wird das unsubstituierte ε-Caprolacton, bei dem n den Wert 4 hat und alle R-Substituenten Wasserstoff sind, bevorzugt. Die Umsetzung mit Lacton wird durch niedermolekulare Polyole, wie Ethylglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Als höhermolekulare Diole eignen sich auch Polylactamdiole, die durch Reaktion von beispielsweise ε-Caprolactam mit niedermolekularen Diolen hergestellt wird.

Als Komponente bb) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Aufgrund ihrer guten Beständigkeit gegenüber ultraviolettem Licht ergeben (cyclo)aliphatische Polyisocyanate Produkte mit geringer Vergilbungsneigung. Beispiele hierfür sind Isophorondiisocyanat, Cyclopentylendiisocyanat, sowie Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel OCN-(CR³₂)ᵣ -NCO, worin r eine ganze Zahl von 2 bis 20, insbesondere 6 bis 8 ist und R³, das gleich oder verschieden sein kann, Wasserstoff oder einen niedrigeren Alkylrest mit 1 bis 8 C-Atomen, vorzugsweise 1 bis 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethandiisocyanat.

Die Komponente bb) muß hinsichtlich der Funktionalität der Polyisocyanate so zusammengesetzt sein, daß kein vernetztes Polyurethanharz erhalten wird. Die Komponente bb) kann neben Diisocyanaten auch einen Anteil an Polyisocyanaten mit Funktionalitäten über zwei - wie z.B. Triisocyanaten - enthalten. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann ggf. durch Zusatz von Monoisocyanaten gesenkt werden. Beispiele für solche kettenabbrechenden Monoisocyanate sind Phenylisocyanat, Cyclohexylisocyanat und Stearylisocyanat.

Um die Wasserverdünnbarkeit der eingesetzten Polyurethanharze zu gewährleisten, müssen zur Anionenbildung befähigte Gruppen in die Polyurethanmoleküle eingebaut werden. Die zur Anionenbildung befähigten Gruppen sorgen nach ihrer Neutralisation dafür, daß das Polyurethanharz in Wasser stabil dispergiert werden kann. Das Polyurethanharz a) soll eine Säurezahl von 10 bis 60, vorzugsweise 20 bis 35 aufweisen. Aus der Säurezahl kann die in die Polyurethanmoleküle einzuführende Menge an zur Anionenbildung befähigten Gruppen berechnet werden.

Die Einführung von zur Anionenbildung befähigten Gruppen in die Polyurethanmoleküle erfolgt über den Einbau von Verbindungen cc) in die Polyurethanmoleküle, die mindestens eine gegenüber Isocyanatgruppen reaktive und eine zur Anionenbildung befähigte Gruppe im Molekül enthalten.

Als Komponente cc) werden vorzugsweise Verbindungen eingesetzt, die zwei gegenüber lsocyanatgruppen reaktive Gruppen im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente cc) können beispielsweise Alkansäuren mit zwei Substituenten an α-ständigen Kohlenstoffatomen eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiel für die Komponente cc) sind Dihydroxypropionsäure. Dihydroxybernsteinsäure und Dihydroxybenzoesäure. Eine besonders bevorzugte Gruppe von Alkansäuren sind die α,α-Dimethylolalkansäuren der allgemeinen Formel R⁴ - C(CH₂ OH)₂ COOH, wobei R⁴ für ein Wasserstoffatom oder eine Alkylgruppe mit bis zu etwa 20 Kohlenstoffatomen steht.

Beispiele für solche Verbindungen sind 2,2-Dimethylolessigsäure, 2,2-Dimethylolpropionsäure, 2,2-Dimethylolbuttersäure und 2,2-Dimethylolpentansäure. Eine besonders bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diamino-diphenylethersulfonsäure.

Die vorzugsweise eingesetzten Polyurethanharze a) können ggf. unter Mitverwendung von Hydroxyl- und/oder Aminogruppen enthaltenden organischen Verbindungen mit einem Molekulargewicht von 40 bis 400, oder einem Gemisch aus solchen Verbindungen hergestellt werden (Komponente dd)). Der Einsatz der Komponente dd) führt zur Molekulargewichtserhöhung der Polyurethanharze. Als Komponente dd) können beispielsweise Polyole mit bis zu 20 Kohlenstoffatome je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden.

Die Polyole werden im allgemeinen in Mengen von bis zu 30 Gew.-%, vorzugsweise 2 bis 20 Gew.-%, bezogen auf die eingesetzte Menge an Komponente aa) und dd) eingesetzt. Als Komponente dd) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methylendiamin, Isophorondiamin, 4,4'-Diaminodicyclohexylmethan und Aminoethylethanolamin. Bevorzugte Diamine sind Hydrazin, Alkyl- oder Cycloalkyldiamine, wie Propylendiamin und 1-Amino-3-aminomethyl-2,5,5-trimethylcyclohexan. Es können auch Polyamine als Komponente dd) eingesetzt werden, die mehr als zwei Aminogruppen im Molekül enthalten. In diesen Fällen ist jedoch z.B. durch Mitverwendung von Monoaminen darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.

Die Herstellung der Komponente a) gehört zum Stand der Technik und wird z.B. in der US-PS 4719132, DE-OS 3628124, EP-A-89497, EP-A-256540 und WO 87/03829 ausführlich beschrieben.

Zur Neutralisierung der Komponente a) können Ammoniak und/oder Amine (insbesondere Alkylamine), Aminoalkohole und cyclische Amine, wie Di- und Triethylamin, Dimethylaminoethanolamin, Diisopropanolamin, Morpholin, N-Alkylmorpholin, eingesetzt werden. Für die Neutralisation werden leicht flüchtige Amine bevorzugt.

Beispiele für geeignete Polyurethane der beschriebenen Art sind die Polyesterurethane, welche von BASF Coatings AG oder BASF Aktiengesellschaft unter der Marke Parocryl® vertrieben werden, insbesondere die Typen AW 51.6 und VP 856604.

Wichtig ist insbesondere die Beachtung des Gewichtsverhältnisses von Bindemittel zu Pigment bzw. Füllstoff. Dies liegt vorzugsweise zwischen 0,5:1 und 1,5:1. Bevorzugt wird der Bereich zwischen 0,6:1 und 1,2:1.

Bewährt hat sich als Pigment bzw. Füllstoff Talkum. Dessen Anteil in der Gesamtmenge an Pigmenten und Füllstoffen liegt bei 20 bis 80 Gew.-%. Bevorzugt wird der Bereich von 30 bis 70 Gew.-%.

Es ist ggf. moglich in geringen Mengen Aminoplaste zuzusetzen. Diese sollten nicht höher als 10 Gew.-% bezogen auf die Gesamtmenge der Basisbeschichtungszusammensetzung (i) ausmachen. Besser ist es, unter 5 Gew.-% zu bleiben. Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen. die in der Regel teilweise oder bevorzugt vollständig mit Alkoholen verethert sind. Vorzugsweise werden wasserverdünnbare Aminoplastharze, insbesondere wasserverdünnbare Melamin-Formaldehydharze eingesetzt.

Polyisocyanatvernetzer können ebenfalls in der Lackschichtformulierung für die Beschichtungszusammensetzung (X) enthalten sein. Deren Anteile liegen regelmäßig unter 30 Gew.-%, vorzugsweise unter 10 Gew.-%. Die Vernetzerreaktivität ist im allgemeinen niedriger als 130 Grad Celsius.

Der Einsatz der voranstehend beschriebenen Beschichtungszusammensetzung (X) erlaubt erheblich niedrigere Schichtdicken als vergleichbare Materialien nach dem Stand der Technik. Diese liegen weit unter 35 µm, d.h. regelmäßig unter 15 µm. Trotz dieser geringen Schichtdicke wird eine Beständigkeit gegen Steinschlag erreicht, die Schichtdicken von 35 um und mehr entspricht.

Auf die Basisbeschichtungszusammensetzung (X) kann, ggf. nach Vortrocknung bei ca. 70°C, die Basisbeschichtungszusammensetzung (Y), die das erfindungsgemäße Beschichtungsmittel enthält, und anschließend eine transparente Deckbeschichtung aufgebracht werden. Der so erhaltene Überzug wird anschließend in an sich bekannterweise, vorzugsweise bei einer Temperatur zwischen 130 und 160°C, eingebrannt. Bei einer farblichen Abstimmung Basisbeschichtungszusammensetzung (X) auf die Farbe der Basisbeschichtungszusammensetzung (Y) ist es sogar möglich, die Schichtdicken noch weiter zu reduzieren, ohne daß es zu einer Qualitätseinbuße kommt.

Die beschriebene Basisbeschichtungszusammensetzung (X) kann neben den genannten Stoffen alle in der Lacktechnologie an sich bekannten Hilfs- und Zusatzmittel, wie sie für das in der Basisbeschichtungszusammensetzung (Y) zu verwendenden erfindungsgemäße Beschichtungsmittel genannt wurden, enthalten.

Nach der Applikation der Basisbeschichtungszusammensetzung (X) wird die Basisbeschichtungszusammensetzung (Y) in an sich bekannter Weise, beispielsweise durch Spritzen, Streichen, Tauchen, Fluten, Rakeln oder Walzen auf das Substrat, wie z.B. Metall, Kunststoff, Holz oder Glas aufgebracht.

Die Basisbeschichtungszusammensetzung (Y) kann gegebenenfalls vor Aufbringen auf die Beschichtung (X) noch mit Wasser zur Einstellung des Festkörpergehaltes, Lösungsmittel oder Rheologiehilfsmittel zur Einstellung der anwendungstechnischen Eigenschaften sowie ggf. einer Base zur pH-Regulierung versetzt werden. Sollte die Viskosität noch nicht in dem gewünschten Bereich liegen, so kann erneut Rheologie-Stabilisator der Komponente (ii) oder weiterer Verdicker, ggf. in einer Menge von 0,01 bis 0,06 Gew.-%, bezogen auf den Festkörpergehalt, zugesetzt werden.

Der Auftrag der transparenten Deckbeschichtung in Stufe (E) erfolgt in der gleichen Weise wie für die oben beschriebenen Stufe (C). Als transparente Deckbeschichtungen können die im Stand der Technik bekannten Klarlacke verwendet werden, wie 1-Komponenten-Klarlacke auf Basis von Acrylat-/Melamin-Harzen, 1-Komponenten-Klarlacke auf Basis von Acrylat-/Melamin-/Polyurethanharzen, 2-Komponenten-Klarlacke auf Basis von Acrylat-/Polyurethanharzen sowie Pulverklarlacke.

### Beispiele

### Beispiel 1 (Erfindung)

### A Stammlack

A1. In einem Reaktionsgefäß wurden 14 Gewichtsteile Wasser, und 2 Gewichtsteile Butylglykol vorgelegt. Unter Rühren wurden 20 Gewichtsteile Acronal® 290 D (wäßrige Dispersion, Festkörpergehalt 50,0 %) zugegeben.
A2. Zu dem in A1 erhaltenen Gemisch wurde langsam ein Gemisch aus 12 Gewichtsteilen Wasser und 2 Gewichtsteilen Viscalex® HV 30 (Festkörpergehalt 30,6 %) gegeben.
A3. In einem separaten Mischer wurde eine Mischung aus 5 Gewichtsteilen Aluminiumflakes und 7 Gewichtsteilen Butylglykol glatt gerührt.

Unter starkem Rühren wurde die in A3 erhaltene Aluminiumaufschlämmung portionsweise in das in A2 erhaltene Gemisch gegeben.

Der pH-Wert des erhaltenen Gemisches wurde mit Dimethylethanolamin (DMEA) auf 7,5 eingestellt.

### B. Vernetzerlack

6 Gewichtsteile Tris(methoxy,butoxy (40:60)-carbonylamino)triazin (Festkörpergehalt 50 %, gelöst in n-Butanol) wurden mit 15 Gewichtsteilen Parocryl® AW 51.6 (Polyesterurethanharz, Festkörpergehalt 42 %, gelöst in Wasser, Handelsprodukt der Anmelderin) und 10 Gewichtsteilen Wasser vermischt.

Die in A und B erhaltenen Mischungen wurden miteinander vermischt. Die Viskosität des erhaltenen Gemisches wurde mit 27 Gewichtsteilen Wasser und 0,3 Gewichtsteilen Viscalex® HV 30 (Festkörpergehalt 30,6 %) auf 80 mPas/1000 sek⁻¹ eingestellt und mit DMEA auf einen pH-Wert von 7,5 eingestellt.

Der fertige Lack hatte einen Festkörpergehalt von 21,9 %.

### Beispiel 2 (Vergleich)

### A Stammlack

Der Stammlack wird wie in Beispiel 1 beschrieben hergestellt.

### B. Vernetzertack

3 Gewichtsteile Melamin Cymel® 327 (Handelsprodukt der Cytec) wurden mit 15 Gewichtsteilen Parocryl® AW 51.6 (Poyesterurethanharz, Festkörpergehalt 42 %, gelöst in Wasser, Handelsprodukt der BASF Coatings AG oder der BASF Aktiengesellschaft) und 10 Gewichtsteilen Wasser vermischt.

Die in A und B erhaltenen Zusammensetzungen werden miteinander vermischt. Die Viskosität der erhaltenen Zubereitung wird mit 26,7 Gewichtsteilen Wasser und 0,3 Gewichtsteilen Viscalex® HV 30 (Festkörpergehalt 30,6 %) auf 80 mPas/sek⁻¹ eingestellt und mit DMEA auf einen pH-Wert von 7,5 eingestellt.

Der fertige Lack hatte einen Festkörpergehalt von 21,95 %.

Die in den Beispielen 1 und 2 hergestellten Lacke wurden mittels elektrostatischer Applikation auf ein mit einem lufttrocknenden pigmentierten Wasserbasislack beschichteten Kunststoffsubstrat mit einer Schichtdicke von 15 µm appliziert. Anschließend wurde mittels elektrostatischer Applikation eine wäßrige Pulverklarlackslurry mit einer Schichtdicke von 45 µm aufgebracht. Nach einer Vortrocknung bei 50 °C über 10 Minuten wurde die Schichten bei 150°C gemeinsam eingebrannt.

Während die mit dem Basislack nach Beispiel 1 hergestellte Lackierung einen gut verlaufenen, glatten und glänzenden Film zeigte, erhielt man bei der nach Beispiel 2 ein Mud-Cracking. Die Lackierung aus Beispiel 2 lieferte einen Film, der ein Rißmuster zeigte. Die durch die Risse entstehenden geometrischen Figuren hatten eine Kantenlänge von 20 mm ± 10.

## Patentansprüche

1. Beschichtungsmittel, das als eine Bindemittelkomponente eine wäßrige Polymerdispersion enthält, enthaltend
(i) ein Acrylat-Polymer auf Basis von 30 bis 60 Gew.-% C₁-C₈-Alkyl(meth)acrylat-Monomeren, 30 bis 60 Gew.-% vinylaromatischen Monomeren und 0,5 bis 10 Gew.-% (Meth)acrylsäure und
(ii) einen nicht-assoziativ wirkenden Rheologie-Stabilisator, der ein Acrylat-Copolymer auf Basis von (C₁-C₆)-Alkyl(meth)acrylat und (Meth)acrylsäure ist, und
(iii) als Vemetzer Tris(alkoxycarbonylamino)triazin oder eine Mischung aus Tris(alkoxycarbonylamino)triazinen.

2. Beschichtungsmittel nach Anspruch 1, **dadurch gekennzeichnet, daß** der Vernetzer in einer Menge von 5 bis 35 Gew.-%, bezogen auf den Festkörpergehalt des gesamten Mittels, enthalten ist.

3. Beschichtungsmittel nach Anspruch 1 oder 2, **dadurch gekennzeichnet, daß** die Komponente (ii) eine Acrylatdispersion mit einem Festkörpergehalt von 5 bis 45 Gew.-%, vorzugsweise 7,0 bis 35 Gew.-% ist.

4. Beschichtungsmittel nach einem der Ansprüche 1 bis 3, **dadurch gekennzeichnet, daß** als C₁-C₈-Alkyl(meth)acrylat Monomere der Komponente (i) Methyl(meth)acrylat, Ethyl(meth)acrylat, Butyl(meth)acrylat und 2-Ethylhexyl(meth)acrylat eingesetzt werden.

5. Beschichtungsmittel nach einem der Ansprüche 1 bis 4, **dadurch gekennzeichnet, daß** als vinylaromatische Monomere Styrol, α-Alkylstyrol und Vinyltoluol eingesetzt werden.

6. Beschichtungsmittel nach einem der Ansprüche 1 bis 5, **dadurch gekennzeichnet, daß** das Acrylat-Copolymer der Komponente (ii) als Monomereinheiten (Meth)acrylsäure und mindestens zwei unterschiedliche Acrylatmonomere enthält, wobei die (Meth)acrylsäure bevorzugt in Mengen von 40 Gew.-% bis 60 Gew.-%, besonders bevorzugt von 46 Gew.-% bis 55 Gew.-%, bezogen auf die Menge des gesamten Copolymers, enthalten ist und das erste (C₁-C₆)-Alkyl(meth)acrylatmonomer vorzugsweise in Mengen von 30 Gew.-% bis 50 Gew.-%, insbesondere 36 Gew.-% bis 46 Gew.-%, und das zweite (Meth)acrylatmonomer vorzugsweise in Mengen von 1 Gew.-% bis 10 Gew.-%, insbesondere 2 Gew.-% bis 8 Gew.-%, jeweils bezogen auf die Menge des gesamten Copolymers, enthalten sind.

7. Verfahren zur Herstellung eines mehrschichtigen Überzugs auf einer Substratoberfläche, bei dem
(A) auf eine mit einem üblichen Füller beschichtete Substratoberfläche als Basisbeschichtungszusammensetzung eine wäßrige Beschichtungszusammensetzung, die als filmbildendes Mittel eine wäßrige Polymerdispersion wie in Anspruch 1 definiert enthält, aufgebracht wird,
(B) auf die so erhaltene Basisschicht eine geeignete transparente Deckbeschichtungszusammensetzung aufgebracht wird und
(C) die Basisschicht zusammen mit der Deckschicht eingebrannt wird.

8. Verfahren zur Herstellung eines mehrschichtigen Überzugs auf einer Substratoberfläche bei dem
(D) auf eine mit einer wäßrigen Basisbeschichtungszusammensetzung (X) beschichtete Substratoberfläche eine wäßrige Basisbeschichtungszusammensetzung (Y), die als filmbildendes Mittel eine wäßrige Polymerdispersion wie in Anspruch 1 definiert enthält, aufgebracht wird,
(E) auf die in Stufe (D) erhaltene Zusammensetzung eine geeignete transparente Deckbeschichtungszusammensetzung aufgebracht wird und
(F) die Basisbeschichtungszusammensetzungen (X) und (Y) zusammen mit der Deckbeschichtungszusammensetzung eingebrannt werden.

9. Verfahren nach Anspruch 7 oder 8, **dadurch gekennzeichnet, daß** als Deckbeschichtungszusammensetzung ein Klarlack aus der Gruppe aus 1-Komponenten-Klarlacken auf Basis von Acrylat-/Melamin-Harzen, 1-Komponenten-Klarlacken auf Basis von Acrylat-/Melamin-/Polyurethanharzen, 2-Komponenten-Klarlacken auf Basis von Acrylat-/Polyurethanharzen sowie Pulverklarlacken aufgebracht wird.

## Claims

1. A coating composition which comprises as one binder component an aqueous polymer dispersion comprising
i) an acrylate polymer based on from 30 to 60% by weight of C₁-C₈-alkyl (meth)acrylate monomers, from 30 to 60% by weight of vinylaromatic monomers and from 0.5 to 10% by weight of (meth)acrylic acid and
(ii) a nonassociative rheology stabilizer which is an acrylate copolymer based on C₁-C₆-alkyl (meth)acrylate and (meth)acrylic acid, and
(iii) as crosslinker, tris(alkoxycarbonylamino)-triazine or a mixture of tris(alkoxycarbonylamino)-triazines.

2. The coating composition as claimed in claim 1, wherein the crosslinker is present in an amount of from 5 to 35% by weight, based on the solids content of the composition as a whole.

3. The coating composition as claimed in claim 1 or 2, wherein component (ii) is an acrylate dispersion having a solids content of from 5 to 45% by weight, preferably from 7.0 to 35% by weight.

4. The coating composition as claimed in one of claims 1 to 3, wherein methyl (meth)acrylate, ethyl (meth)acrylate, butyl (meth)acrylate and 2-ethylhexyl (meth)acrylate are employed as C₁-C₈-alkyl (meth)-acrylate monomers of component (i).

5. The coating composition as claimed in one of claims 1 to 4, wherein styrene, α-alkylstyrene and vinyltoluene are employed as vinylaromatic monomers.

6. The coating composition as claimed in one of claims 1 to 5, wherein the acrylate copolymer of component (ii) comprises as monomer units (meth)acrylic acid and at least two different acrylate monomers, the (meth)acrylic acid preferably being present in amounts of from 40% by weight to 60% by weight, with particular preference from 46% by weight to 55% by weight, based on the amount of the overall copolymer, and the first C₁-C₆-alkyl (meth)acrylate monomer preferably being present in amounts of 30% by weight to 50% by weight, in particular from 36% by weight to 46% by weight, and the second (meth)acrylate monomer preferably being present in amounts of from 1% by weight to 10% by weight, in particular from 2% by weight to 8% by weight, based in each case on the amount of the overall copolymer.

7. A process for producing a multilayer coating on a substrate surface, in which
(A) an aqueous coating formulation which comprises an aqueous polymer dispersion as defined in claim 1 as film-forming agent is applied as basecoat composition to a substrate surface coated with a customary filler,
(B) a suitable transparent topcoat composition is applied to the resultant basecoat, and
(C) the basecoat is stoved together with the topcoat.

8. A process for producing a multilayer coating on a substrate surface, in which
(D) an aqueous basecoat formulation (Y) which comprises an aqueous polymer dispersion as defined in claim 1 as film-forming agent is applied to a substrate surface coated with an aqueous basecoat formulation (X),
(E) a suitable transparent topcoat formulation is applied to the formulation obtained in stage (D) and
(F) the basecoat formulations (X) and (Y) are stoved together with the topcoat formulation.

9. The process as claimed in claim 7 or 8, wherein the topcoat formulation applied is a clearcoat from the group consisting of 1-component clearcoats based on acrylate/melamine resins, 1-component clearcoats based on acrylate/melamine/polyurethane resins, 2-component clearcoats based on acrylate/polyurethane resins, and transparent powder coating materials.

## Revendications

1. Composition de revêtement, qui contient, en tant que composant de liant, une dispersion aqueuse de polymères, contenant
(i) un polymère d'acrylate à base de 30 à 60% en poids de monomères de (méth)acrylates de C₁-C₈-alkyle, de 30 à 60% en poids de monomères vinylaromatiques et de 0,5 à 10% en poids d'acide (méth)acrylique et
(ii) un stabilisateur de la rhéologie agissant d'une manière non associative, qui est un copolymère d'acrylate à base de (méth)acrylate de (C₁-C₆)-alkyle et d'acide (méth)acrylique, et
(iii) la tris(alcoxycarbonylamino)triazine ou un mélange de tris(alcoxycarbonylamino)triazines en tant qu'agent de réticulation.

2. Composition de revêtement selon la revendication 1, **caractérisée en ce que** l'agent de réticulation est contenu dans une quantité de 5 à 35% en poids, par rapport à la teneur en matières solides de la composition globale.

3. Composition de revêtement selon la revendication 1 ou 2, **caractérisée en ce que** le composant (ii) est une dispersion d'acrylate ayant une teneur en matières solides de 5 à 45% en poids, de préférence de 7,0 à 35% en poids.

4. Composition de revêtement selon l'une quelconque des revendications 1 à 3, **caractérisée en ce que** l'on utilise, en tant que monomères du composant (i) de (méth)acrylate de C₁-C₈-alkyle, le (méth)acrylate de méthyle, le (méth)acrylate d'éthyle, le (méth)acrylate de butyle et le (méth)acrylate de 2-éthylhexyle.

5. Composition de revêtement selon l'une quelconque des revendications 1 à 4, **caractérisée en ce que** l'on utilise, en tant que monomères vinylaromatiques, le styrène, l'α-alkylstyrène et le vinyltoluène.

6. Composition de revêtement selon l'une quelconque des revendications 1 à 5, **caractérisée en ce que** le copolymère d'acrylate du composant (ii) contient, en tant qu'unités monomères, l'acide (méth)acrylique et au moins deux monomères d'acrylate différents, l'acide (méth)acrylique étant contenu de préférence dans des quantités de 40% en poids à 60% en poids, en particulier de préférence de 46% en poids à 55% en poids, par rapport à la quantité du copolymère global et **en ce que** le premier monomère d'acrylate de (C₁-C₆)-alkyle est contenu de préférence dans des quantités de 30% en poids à 50% en poids, en particulier de 36% en poids à 46% en poids, et **en ce que** le deuxième monomère de (méth)acrylate est contenu de préférence dans des quantités de 1% en poids à 10% en poids, en particulier de 2% en poids à 8% en poids, à chaque fois par rapport à la quantité du copolymère global.

7. Procédé de fabrication d'un revêtement multicouches sur la surface d'un substrat, lors duquel
(A) l'on applique, sur une surface de substrat revêtue d'une charge usuelle en tant que composition de revêtement de base, une composition de revêtement aqueuse, qui contient en tant qu'agent filmogène, une dispersion aqueuse de polymères, comme définie dans la revendication 1,
(B) l'on applique, sur la couche de base ainsi obtenue, une composition de revêtement de finition transparente appropriée et
(C) l'on procède à la cuisson de la couche de base conjointement à la couche de finition.

8. Procédé de fabrication d'un revêtement multicouche sur une surface de substrat, lors duquel,
(D) l'on applique, sur une surface de substrat revêtue d'une composition de revêtement de base aqueuse (X), une composition de revêtement de base aqueuse (Y), qui contient en tant qu'agent filmogène, une dispersion aqueuse de polymères, comme définie dans la revendication 1,
(E) l'on applique, sur la composition obtenue dans l'étape (D), une composition de revêtement de finition transparente appropriée et
(F) l'on procède à la cuisson des compositions de revêtement de base (X) et (Y), conjointement à la composition de revêtement de finition.

9. Procédé selon la revendication 7 ou 8, **caractérisé en ce que** l'on applique, en tant que composition de revêtement de finition, une laque transparente en provenance du groupe de laques transparentes à 1 composant à base de résines acrylate/mélamine, de laques transparentes à 1 composant à base de résines acrylate/mélamine/polyuréthane, de laques transparentes à 2 composants à base de résines acrylate/polyuréthane ainsi que des laques en poudre.
